# EUROPEAN PATENT SPECIFICATION

(11) **EP 1 595 036 B1**
(45) Date of publication and mention of the grant of the patent: **26.09.2012**
(21) Application number: 02808272.5
(22) Date of filing: 23.12.2002
(51) Int. Cl.: E03D 5/00, E03B 1/04

(54) **GREYWATER RECYCLING SYSTEM**
SYSTEM ZUR WIEDERVERWERTUNG VON GRAUWASSER
SYSTEME DE RECYCLAGE DES EAUX MENAGERES USEES

(43) Date of publication of application: 16.11.2005
(73) Proprietor: Ökrös, Pal, 1098 Budapest (HU)
(72) Inventor: Ökrös, Pal, 1098 Budapest (HU)
(74) Representative: Ronaszéki, Tibor
(86) International application number: PCT/HU2002/000164
(87) International publication number: WO 2004/057119

(56) References cited:
- WO-A-99/54559
- DE-A- 3 932 022
- DE-A- 19 502 354
- FR-A- 2 697 552
- GB-A- 2 344 132
- GB-A- 2 365 912

## Description

The subject of the invention is a greywater recycling system according to the preamble of claim 1

The traditional flushing toilet constructions are described in detail on the pages 593-599 of the book "Water supply. Canalization, gas supply of buildings" (written by Ballai and Marton, published by Müszaki Könyvkiadó, Budapest, 1977). The traditional overfeed flushing toilet consists of an open tank with a capacity of about 8 litres, a float valve, and a weighted flushing valve. The pivoted support arm of the float valve closes directly the fill valve, the upper part of the floater is floating on the surface of the water. The disadvantage of those flushing constructions is that the use potable water, which is becoming more and more valuable and expensive. As freshwater reserves of the Earth have become less available, the need to reuse part of the domestic waste-water has arisen. The waste-water produced by washing machines, bath tub and shower is called grey-water.

There are a number of known grey-water reusing equipments. The technical solution as per the US 5,201,082 patent script is grey-water for flushing toilet. It does not use clean water, so the use of greywater and clean water is not combined, and no mention is made about enlarging the tank.

The technical solution as per the US 5,406,657 patent script, uses the standard flushing tank, and in addition to it a greywater collecting tank is used from which the grey-water is pumped into the flushing tank if the water level does not reach the maximum level in it. It does not use clean water, so the use of greywater and clean water is not combined, and no mention is made about enlarging the tank.

According to the US 5,406,657 patent script a tube connected to the sink-hole of the wash basin conducts the greywater to the traditional sized flushing tank, which is located directly above the toilet bowl. The sink-hole of the wash basin (or shower, etc.) must be at a level higher than the inlet hole of the tank—which can include the dwelling floor level difference, so that the greywater could flow into the tank by gravity free-fall. The clean water fill valve is omitted from the tank, consequently, if there is no sufficient quantity of greywater — which can be seen through a sight glass — the tank can be filled up by opening the tap of the wash basin. Thus filling the tank is not automatic.

The US 4,017,395 uses a separate tank-system for treating greywater, including solid-liquid separator tank, disinfecting tank, etc. The size of the flushing tank is not enlarged, and flushing is not combined with clean water.

The technical solution as per the description of the US 4,115,876 is using a separate holding tank from where the raw waste water is pumped into a combined sterilization and flocculation cell unit, then it is pumped into another tank, and only after that is it pumped into the flushing tank. The system is conceived for toilets on different vehicles, such as for ship or for mobile home. The black water must be pumped many times from one tank into the other. The aim of the system is to reuse the same waste-water following its treatment many times for the flushing of toilets. The size of the toilet tank is not enlarged, and it is not combined with clean water.

The greywater reusing systems as per the US 5,406,657 and US 5,243,719 patent descriptions describe a piping connected to the sink-hole of the wash basin or of the shower, which conducts the greywater through separate tanks to the toilet flushing tank. Besides the flushing tank, it uses one or more separate greywater tanks. The size of the toilet tank is not enlarged, and it is not combined with clean water.

The US 5,341,529 patent script for reusing greywater for flushing toilets, without enlarging the size of the "primary" flushing tank of the traditional flushing toilet, is applying a separate "auxiliary tank", which is located right above the primary tank. The primary flushing tank is using clean water, too, for flushing. The greywater is sent to the auxiliary tank by a water pump. The use of clean and greywater is already combined, but in two separate tanks.

The subject of the CA 2,093,247 patent description is a technical solution which is a combined giant flushing toilet tank reusing greywater, into which the greywater is flowing by gravitation free-fall from an upper dwelling floor. If the water in the tank is not enough for one flushing, the invention, besides reusing greywater, uses clean water as well for flushing. However, the clean water fill valve is located in a distance from the bottom of the tank which is the maximum level for clean water, measuring the volume of water enough for one flushing. This means, that if the greywater level is even slightly over the one-flush volume level, which is generally the case, the clean-water fill valve is practically always submerged in waste-water. In case of a failure of the clean-water fill valve the waste-water can infiltrate into the clean-water supply piping, since the water pressure in a completely filled up tank can be higher than the water pressure inside the clean-water supply pipe. Due to the above, this solution can not be considered hygienic. Furthermore, the tank is conceived to use greywater outside the household, originating from other neighbouring households, which may raise concern, since the user is not likely to readily receive into her/his home the waste-water of other households. The utilization of the tank takes into account only the greywater originating from washing oneself, which accounts for about 30% of household water consumption, but it does not target use of the greywater originating from the washing machine which represents a further 20% approximately. Toilet flushing accounts for about 40% of household water consumption.

The DE 39 32 022 patent specification introduces a further system in which there are two separated tanks. In this equipment the flushing tank is physically and logically separated from a greywater tank, and the flushing tank contains a floating ball is fixed by a pivoted support arm to the water valve. In this German patent description the pivoted support arm is the actuating shaft at the same time, like in a standard floating ball system flushing tank.

The disadvantage of this solution is that the greywater from the greywater tank can go to the flushing tank only with the help of an electric pump and it is supervised by a special three-way cock and an electric controller. Thus, this system can not work without electricity. The further disadvantage of this solution is that this is not in compliance with the safety requirements of the plumbing standards, since in case of the malfunction of the three-way cock the greywater could flow back into the freshwater piping. Greywater pipes must be completely independent from freshwater piping and the two different systems can not be connected with any valve.

The patent description of GB 2.344.132 mentions many different types of greywater tanks, which are clearly separated from the flushing tank both physically and logically. Although the floating valve - plunger valve mechanism is used in one type of the greywater tanks the system uses minimum three different tanks of different types and different functions, over and above the regular standard toilet flushing tank.

The problem to be solved by the present invention, is to eliminate the disadvantages of the technical solutions known up to date, and to develop a greywater recycling system which is operating automatically, recycles the greywater from the washing machine, as well, and makes use of greywater accumulating only within the same household, furthermore, which is simple and inexpensive.

The basic idea of the invention is the recognition that the implementation of the measures described in the claim 1 will result in a system which is more advantageous than the previous ones.

The greywater recycling system described in claim 1, solves the above mentioned problem

It may be typical that the washing machine being connected to the bath tub with a greywater suction pipe is provided with a secondary water pump, which, in turn, is connected to the tank by means of a secondary greywater drain pipe. There is an in-line water sensing unit mounted before the secondary water pump enabling it to start automatically, and after the drain orifice a non-return valve is mounted into the secondary greywater drain pipe.

In one version of the invention, there is a stopping member fixed to the side wall of the tank, determining the position of the floating ball closing the clean water fill valve, as well as the ration of greywater and clean supply water. The primary water pump is connected to the tank by means of the primary greywater drain pipe, which is also provided with a non-return valve.

In further possible versions the greywater tube is connected with a greywater valve to the primary greywater drain pipe, and in given cases to the secondary greywater drain pipe. On the outlet of the greywater pipe there are one or more filtering units suitably mounted within the tank. The tank has a compensating air orifice for the compensation of the atmospheric pressure. The tank is provided with an overflow tube, the diameter of which is greater than, or equal to that of the greywater pipe.

The greywater recycling system as per the present invention has numerous advantages. Its operation is fully automatic, thus needs no human intervention whatsoever. In case the large combined tank is overfilled, the greywater surplus flows automatically to the toilet bowl through the overflow tube. Inasmuch as there is not enough greywater for one flushing, the system provides fresh water supply automatically. It is operating with pumps as well, therefore it is not absolutely necessary to found its operation on gravity free-flow, due to dwelling floor differences, and it is using only the grey-water originating within one and the same household. The water pumps are located in a safe place inside the washing machine, thus no additional power supply is needed. The system is simple to install, and its manufacturing is economical, since it consists of parts the majority of which is well-known.

In the following, the invention is presented in detail with examples of technical solutions on basis of drawings. The attached drawings present the following:
Figure 1 shows the longitudinal section of the tank,
Figure 2 shows a possible version of the system.

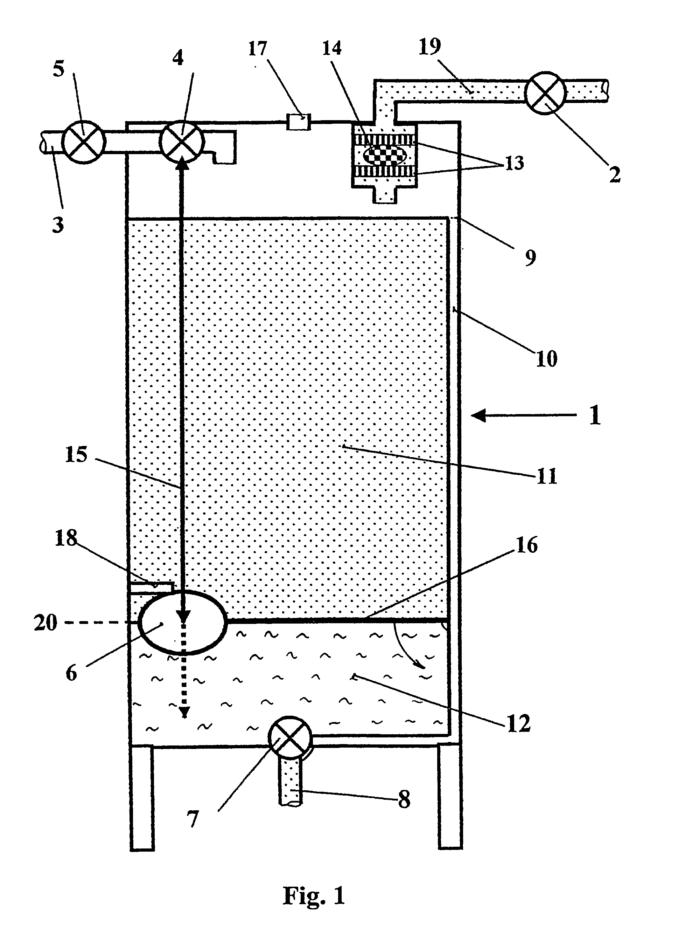

Figure 1 shows the 1 tank, the 2 greywater valve, the 3 water supply pipe, the 4 fill valve, the 5 shut-off valve, the 6 floating ball, the 7 flushing valve, the 8 flushing conduit, the 9 overflow orifice, the 10 overflow tube, the 13 filtering units, the 14 disinfecting unit, the 15 actuating shaft, the 16 pivoted support arm, the 17 compensating air orifice, the 18 stopping member, and the 19 greywater pipe.

The 1 tank can have various dimensions; the 100 litre size is advantageous. The greywater arriving through the 19 greywater tube is directed through the 13 filtering unit, consisting of a metal pre-filter screen and a finer filter. This filters out possible pieces of hair, and threads or fluffs. The 14 disinfecting unit chlorinates the greywater. The treated greywater flows into the 1 tank. Inasmuch as the water quantity exceeds the capacity of the 1 tank, the 11 greywater surplus flows through the 9 overflow orifice, and the 10 overflow tube and exits the tank through the 8 flushing conduit. The diameter of the 10 overflow tube is identical to, or greater than that of the 19 greywater tube. When flushing, by opening the 7 flushing valve the quantity of water necessary for the flushing — about 6-7 litres — is leaving the tank through the 7 flushing valve and the 8 flushing conduit. The 11 greywater can mix with the 12 supply water. If there is sufficient quantity of 11 greywater present, the location of the 6 floating ball is fixed at the 20 supply water level.

The 6 floating ball comes into action when the 1 tank does not contain 11 greywater, or the water quantity in the tank sinks below the level of about 6-7 litres, determined by the 18 stopping member. In such a case, the 16 pivoted support arm swing downwards, the 15 actuating shaft on its turn opens the 4 fill valve. Fresh 12 supply water flows into the 1 tank through the 3 water supply pipe and the 4 fill valve. The inflowing 12 supply water pushes the 6 floating valve upwards, also moving upwards the 15 actuating shft, which closes the 4 fill valve. At that moment, the 6 floating ball is at the 20 supply water level. If after that 11 greywater flows into the tank, the 6 floating ball can no more rise upwards, because it bumps into the 18 stopping member, so it remains at the 20 supply water level.

Limiting the upward movement of the 6 floating ball is also possible at the articulating joint where the 16 pivoted support arm is fixed to the 1 tank. In this way, the 12 supply water can flow into the 1 tank only when the water quantity in the 1 tank is below the volume sufficient for one flushing. In the 1 tank the atmospheric pressure and the steady flowing out of the flushing volume is ensured by the 17 compensating air orifice.

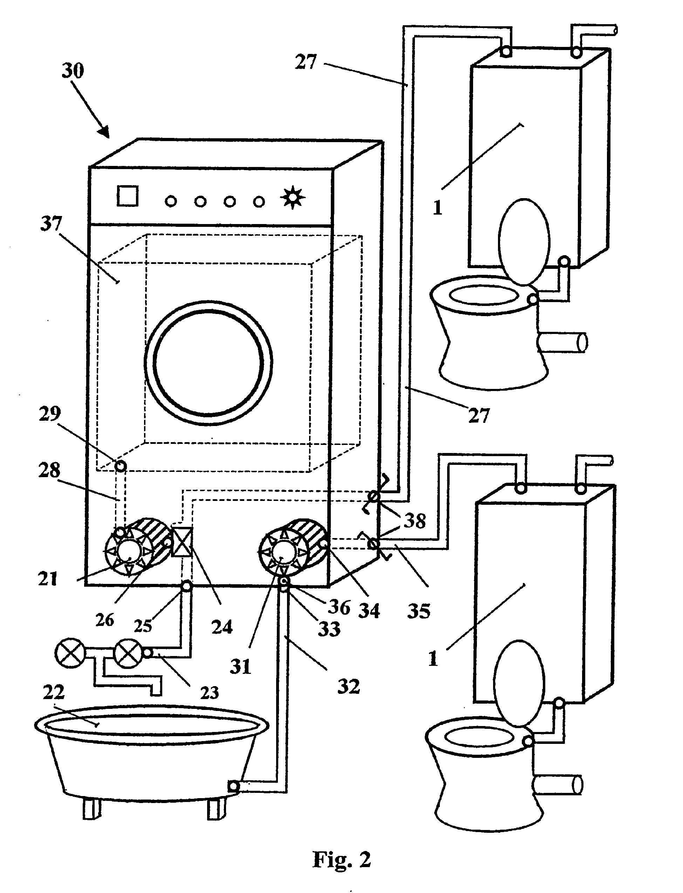

Figure 2 shows the 1 tank, the 21 primary water pump, the 22 bath tub, the 23 supply pipe connection, the 24 solenoid valve, the 25 water supply connection, the 26 outflow orifice, the 27 primary greywater drain pipe, the 28 washing space connecting duct, the 29 washing space connection, the 30 washing machine, the 35 secondary greywater drain pipe, the 36 water sensor, the 37 washing space and the 38 non-return valve. Figure 2 shows two pieces of 1 tank, but the number of tanks can be one or more. In case of one tank, the 27 primary greywater drain pipe and the 35 secondary greywater drain pipe can be connected.

The 21 primary water pump is the original water pump of the 30 washing machine. It is required that the power and the lifting height of the 21 primary water pump is increased to exceed those of the pump types presently used in washing machines, in function of the dwelling floor difference and the distance to the 1 tank. The power of the electric centrifugal pumps most widely used in washing machines is about 100 W. The increased power of the 21 primary water pump is between 100 and 400 W, preferably 200 W, its increased water pressure is between 0.4 and 1.0 bar. The 31 secondary water pump incorporated into the 30 washing machine is preferably in the upper segment of the above mentioned power range, preferably 400 W, and its water pressure is between 0.5 and 1 bar. Its power supply is ensured by the power supply of the 30 washing machine, in a way that it is working automatically, and it is completely independent of all the original functions of the 30 washing machine.

The 31 secondary water pump is activated by the 36 water sensor—that can be enabled/disabled by a separate switch—and it comes into action when water arrives and sensed in the 32 greywater suction pipe. The 36 water sensor is optimally located between the 31 secondary water pump and the 33 suction pipe connection. The 38 non-return valves prevent backflow of the greywater. The greywater from the 30 washing machine is pumped through the 29 washing space connection, the 8 washing space connecting duct, the 21 primary water pump, the 26 outflow orifice, the 38 non-return valve and the 27 primary greywater drain pipe to the 1 tank. The water supply of the 30 washing machine is also indicated, through the 23 supply pipe connection, the 25 water supply connection, and the 24 solenoid valve. The greywater from the 22 bath tub is drained through the 32 greywater suction pipe, the 33 suction pipe connection, the 36 water sensor, the 34 drain orifice, the 38 non-return valve and the 35 secondary greywater drain pipe into the 1 tank.

Under the protection of the patent other versions of the present system are also possible. As an example, the 7 flushing valve can be mounted on the 8 flushing conduit in the W.C. on a different floor, and not on the lower part of the 1 tank which 1 tank may be located in the attic. The greywater recycling system of the present invention provides the solution for the automatic recycling of greywater originating in the households from washing machine and the bath tub by reusing the greywater for flushing the toilet.

### List of references

- 1: tank
- 2: greywater valve
- 3: water supply pipe
- 4: fill valve
- 5: shut-off valve
- 6: floating ball
- 7: flushing valve
- 8: flushing conduit
- 9: overflow orifice
- 10: overflow tube
- 11: greywater surplus
- 12: supply water
- 13: filtering unit
- 14: disinfecting unit
- 15: actuating shaft
- 16: pivoted support arm
- 17: compensating air orifice
- 18: stopping member
- 19: greywater pipe
- 20: supply water level
- 21: primary water pump
- 22: bath tub
- 23: supply pipe connection
- 24: solenoid valve
- 25: water supply connection
- 26: outflow orifice
- 27: primary greywater drain pipe
- 28: washing space connecting duct
- 29: washing space connection
- 30: washing machine
- 31: secondary water pump
- 32: greywater suction pipe
- 33: suction pipe
- 34: drain orifice
- 35: secondary greywater drain pipe
- 36: water sensor
- 37: washing space
- 38: non-return valve

## Claims

1. Greywater recycling system, for the economical flushing of toilets, comprising a bath tub (22), a washing machine (30) provided with a primary water pump (21), and a tank (1) equipped with a water supply pipe (3) with a clean water fill valve (4), with a flushing conduit (8) with a flushing valve (7) and with a greywater pipe (19) which is connected to the bath tub (22) and to the washing machine (30) the tank comprising furthermore a floating ball (6), which floating ball (6) is pivotally fixed to the tank (1) by a pivoted support arm (16); the system being **characterised in that** it comprises only one tank (1), and **in that** the water supply pipe (3) and the greywater pipe (19) are connected to the only one tank (1) independently from each other; the tank (1) has a stopping member (18) at a supply water level height (20); the floating ball (6) is fixed by the pivoted support arm (16) to the side wall of the tank (1) allowing it to swing in vertical plane till the stopping member (18); furthermore there is a greywater column (11) above the floating ball (6), and a vertical actuating shaft (15) fixed onto the floating ball (6) also, wherein the vertical actuating shaft (15) passes through the greywater column (11) above the floating ball (6) and is mechanically connected to the clean water fill valve (4) of the water supply pipe (3).

2. Greywater recycling system according to claim 1, wherein the washing machine (30), being connected to the bath tub (22) with a greywater suction pipe (32), is provided with a secondary water pump (31), which secondary water pump (31) is connected to the tank (1) by means of a secondary greywater drain pipe (35).

3. Greywater recycling system according to claim 2, wherein there is an in-line water sensor (36) mounted before the secondary water pump (31) enabling the secondary water pump (31) to start automatically, and a non-return valve (38) is mounted into the secondary greywater drain pipe (35).

4. Greywater recycling system according to any of claims 1 to 3, wherein the stopping member (18) is fixed to the wall of the tank (1), determining the uppermost position of the floating ball (6) closing the clean water fill valve (4), as well as the ratio of greywater (11) and clean supply water (12).

5. Greywater recycling system according to any of claim 1 to 4, wherein the primary water pump (21) is connected to the tank (1) by means of the primary greywater drain pipe (27), which primary greywater drain pipe (27) is provided with a non-return valve (38).

6. Greywater recycling system according to any of claim 1 to 5, wherein the greywater pipe 4 (19) is connected through a greywater valve (2) to the primary greywater drain pipe (27), and in given cases to the secondary greywater drain pipe (35).

7. Greywater recycling system according to any of claim 1 to 6, wherein on the outlet of the greywater pipe (19) there are one or more filtering units (13) suitably mounted within the tank (1).

8. Greywater recycling system according to any of claim 1 to 7, wherein the tank (1) has a compensating air orifice (17) for the compensation of the atmospheric pressure.

9. Greywater recycling system according to any of claim 1 to 8, wherein the tank (1) is provided with an overflow tube (10), the diameter of which is greater than or equal to that of the greywater pipe (19).

## Patentansprüche

1. System zur Wiederverwertung von Grauwasser für ein wirtschaftliches Spülen von Toiletten, umfassend eine Badewanne (22), eine Waschmaschine (30), die mit einer primären Wasserpumpe (21) versehen ist, und einen Tank (1), der mit einem Wasserzuführrohr (3) mit einem Frischwasserfüllventil (4), mit einer Spülleitung (8) mit einem Spülventil (7) und mit einem Grauwasserrohr (19) ausgestattet ist, das mit der Badewanne (22) und der Waschmaschine (30) verbunden ist, wobei der Tank (1) darüber hinaus einen Schwimmerball (6) aufweist, wobei der Schwimmerball (6) über einen verschwenkbaren Trägerarm (16) verschwenkbar an dem Tank (1) angebracht ist; wobei das System **dadurch gekennzeichnet ist, dass** es nur einen Tank (1) aufweist und dass das Wasserzuführrohr (3) und das Grauwasserrohr (19) unabhängig voneinander an dem nur einen Tank (1) angeschlossen sind; wobei der Tank (1) ein Stopperelement (18) an einer Zuführwassemiveauhöhe (20) aufweist; wobei der Schwimmerball (6) über den verschwenkbaren Trägerarm (16) an der Seitenwand des Tanks (1) befestigt ist, wodurch es ihm ermöglicht wird, in einer senkrechten Ebene bis zu dem Stopperelement (18) zu schwingen; wobei darüber hinaus eine Grauwassersäule (11) oberhalb des Schwimmerballs (6) vorgesehen ist, sowie eine senkrechte Betätigungsstange (15), die an dem Schwimmerball (6) befestigt ist, wobei die senkrechte Betätigungsstange (15) oberhalb des Schwimmerballs (6) durch die Grauwassersäule (11) hindurch verläuft und mechanisch mit dem Frischwasserfüllventil (4) des Wasserzuführrohrs (3) verbunden ist.

2. System zur Wiederverwertung von Grauwasser nach Anspruch 1, wobei die Waschmaschine (30), die mit einem Grauwassersaugrohr (32) mit der Badewanne (22) verbunden ist, mit einer sekundären Wasserpumpe (31) versehen ist, wobei die sekundäre Wasserpumpe (31) mittels eines sekundären Grauwasserabflussrohrs (35) mit dem Tank (1) verbunden ist.

3. System zur Wiederverwertung von Grauwasser nach Anspruch 2, wobei innerhalb der Leitung vor der sekundären Wasserpumpe (31) ein Wassersensor (36) angebracht ist, der es der sekundären Wasserpumpe (31) ermöglicht, automatisch zu starten, und wobei ein Rückschlagventil (38) in dem sekundären Grauwasserabflussrohr (35) angebracht ist.

4. System zur Wiederverwertung von Grauwasser nach einem der Ansprüche 1 bis 3, wobei das Stopperelement (18) an der Wand des Tanks (1) angebracht ist, wobei es die oberste Position des Schwimmerballs (6) ermittelt, die das Frischwasserfüllventil (4) schließt, sowie das Verhältnis von Grauwasser (11) und sauberem Zuführwasser (12).

5. System zur Wiederverwertung von Grauwasser nach einem der Ansprüche 1 bis 4, wobei die primäre Wasserpumpe (21) mittels eines primären Grauwasserabflussrohrs (27) mit dem Tank (1) verbunden ist, wobei das primäre Grauwasserabflussrohr (27) mit einem Rückschlagventil (38) versehen ist.

6. System zur Wiederverwertung von Grauwasser nach einem der Ansprüche 1 bis 5, wobei das Grauwasserrohr (19) über ein Grauwasserventil (2) mit dem primären Grauwasserabflussrohr (27) und in bestimmten Fällen mit dem sekundären Grauwasserabflussrohr (35) verbunden ist.

7. System zur Wiederverwertung von Grauwasser nach einem der Ansprüche 1 bis 6, wobei an dem Auslass des Grauwasserrohrs (19) eine oder mehrere Filtereinheiten (13) in geeigneter Weise innerhalb des Tanks (1) angebracht sind.

8. System zur Wiederverwertung von Grauwasser nach einem der Ansprüche 1 bis 7, wobei der Tank (1) eine Kompensationsluftöffnung (17) für den Ausgleich des atmosphärischen Drucks aufweist.

9. System zur Wiederverwertung von Grauwasser nach einem der Ansprüche 1 bis 8, wobei der Tank (1) mit einem Überflussrohr (10) versehen ist, dessen Durchmesser größer ist als oder gleich demjenigen des Grauwasserrohrs (19).

## Revendications

1. Système de recyclage des eaux ménagères usées pour tirer économiquement la chasse des toilettes, comprenant une baignoire (22), une machine à laver (30) dotées d'une pompe à eau principale (21) et un réservoir (1) équipé d'un tuyau d'alimentation en eau (3) avec un robinet de remplissage d'eau propre (4), avec un conduit de chasse d'eau (8) avec un robinet de chasse d'eau (7) et avec un tuyau des eaux ménagères usées (19) qui est raccordé à la baignoire (22) et à la machine à laver (30), le réservoir (1) comprenant en outre une sphère flottante (6), laquelle sphère flottante (6) est fixée de manière pivotante au réservoir (1) par un bras de support pivoté (16) ; le système étant **caractérisé en ce qu'**il comprend uniquement un réservoir (1) et **en ce que** le tuyau d'alimentation en eau (3) et le tuyau des eaux ménagères usées (19) sont raccordés au seul et unique réservoir (1) indépendamment l'un de l'autre ; le réservoir (1) a un élément de butée (18) à une hauteur de niveau d'eau d'alimentation (20), la sphère flottante (6) est fixée par le bras de support pivoté (16) à la paroi latérale du réservoir (1) lui permettant d'osciller dans le plan vertical jusqu'à l'élément de butée (18) ; en outre, on trouve une colonne des eaux ménagères usées (11) au-dessus de la sphère flottante (6), et un arbre d'actionnement vertical (15) fixé sur la sphère flottante (6) également, dans lequel l'arbre d'actionnement vertical (15) traverse la colonne des eaux ménagères usées (11) au-dessus de la sphère flottante (6) et est raccordé mécaniquement au robinet de remplissage d'eau propre (4) du tuyau d'alimentation en eau (3).

2. Système de recyclage des eaux ménagères usées selon la revendication 1, dans lequel la machine à laver (30), qui est raccordée à la baignoire (22) avec un tuyau d'aspiration des eaux ménagères usées (32), est prévue avec une pompe à eau secondaire (31), laquelle pompe à eau secondaire (31) est raccordée au réservoir (1) au moyen d'un tuyau d'évacuation des eaux ménagères usées secondaire (35).

3. Système de recyclage des eaux ménagères usées selon la revendication 2, dans lequel on trouve un capteur d'eau en ligne (36) monté avant la pompe à eau secondaire (31) permettant à la pompe à eau secondaire (31) de démarrer automatiquement, et une soupape de non-retour (38) est montée dans le tuyau d'évacuation des eaux ménagères usées secondaire (35).

4. Système de recyclage des eaux ménagères usées selon l'une quelconque des revendications 1 à 3, dans lequel l'élément de butée (18) est fixé sur la paroi du réservoir (1), déterminant la position la plus haute de la sphère flottante (6) fermant le robinet de remplissage d'eau propre (4), ainsi que le rapport des eaux ménagères usées (11) et de l'eau d'alimentation propre (12).

5. Système de recyclage des eaux ménagères usées selon l'une quelconque des revendications 1 à 4, dans lequel la pompe à eau principale (21) est raccordée au réservoir (1) au moyen du tuyau d'évacuation des eaux ménagères usées principal (27), lequel tuyau d'évacuation des eaux ménagères usées principal (27) est doté d'une soupape de non-retour (38).

6. Système de recyclage des eaux ménagères usées selon l'une quelconque des revendications 1 à 5, dans lequel le tuyau des eaux ménagères usées (19) est raccordé par le biais d'une vanne des eaux ménagères usées (2) au tuyau d'évacuation des eaux ménagères usées principal (27), et dans certains cas au tuyau d'évacuation des eaux ménagères usées secondaire (35).

7. Système de recyclage des eaux ménagères usées selon l'une quelconque des revendications 1 à 6, dans lequel, sur la sortie du tuyau des eaux ménagères usées (19), on trouve une ou plusieurs unités de filtration (13) montées de manière appropriée à l'intérieur du réservoir (1).

8. Système de recyclage des eaux ménagères usées selon l'une quelconque des revendications 1 à 7, dans lequel le réservoir (1) a un orifice d'air de compensation (17) pour la compensation de la pression atmosphérique.

9. Système de recyclage des eaux ménagères usées selon l'une quelconque des revendications 1 à 8, dans lequel le réservoir (1) est prévu avec un tube de trop-plein (10) dont le diamètre est supérieur ou égal à celui du tuyau des eaux ménagères usées (19).
